# EUROPÄISCHE PATENTSCHRIFT

(11) **EP 3 909 682 B1**
(45) Veröffentlichungstag und Bekanntmachung des Hinweises auf die Patenterteilung: **06.04.2022**
(21) Anmeldenummer: 20174635.1
(22) Anmeldetag: 14.05.2020
(51) Int. Cl.: B02C 15/00, C04B 20/06, C04B 7/12, B02C 23/26, C04B 7/13, C04B 14/10, C04B 28/02, C04B 103/00

(54) **VERFAHREN UND WÄLZMÜHLE ZUM THERMOMECHANISCHEN AKTIVIEREN EINES TONGEMISCHS**
METHOD AND ROLLER MILL FOR THERMOMECHANICALLY ACTIVATING A CLAY MIXTURE
PROCÉDÉ ET BROYEUR À ROULEAUX PERMETTANT L'ACTIVATION THERMOMÉCANIQUE D'UN MÉLANGE D'ARGILES

(43) Veröffentlichungstag der Anmeldung: 17.11.2021
(73) Patentinhaber: Gebr. Pfeiffer SE, 67655 Kaiserslautern (DE)
(72) Erfinder: HOFFMANN, Dirk, 67705 Trippstadt (DE); KRAFT, Burkhard, 67661 Kaiserslautern (DE); WOYWADT, Caroline, 54298 Aach (DE); LESSMEISTER, Hardy, 67655 Kaiserslautern (DE)
(74) Vertreter: Grünecker Patent- und Rechtsanwälte PartG mbB

(56) Entgegenhaltungen:
- WO-A1-2017/072047
- WO-A1-2020/025783
- CN-U- 206 853 810
- DE-A1- 10 305 915
- DE-A1-102011 014 498
- DE-B3-102013 213 005

## Beschreibung

Die vorliegende Erfindung betrifft ein Verfahren zum mechanochemischen Aktivieren eines Tongemischs und eine diesbezügliche Wälzmühle.

Weltweit wird im Bauwesen Zementbeton eingesetzt, welcher das Bindemittel Zement, Wasser und eine Gesteinskörnung umfasst. Aus ökonomischen und ökologischen Gründen können Zementzusatzstoffe zum Einsatz kommen. Ziel ist es dabei, den Klinkeranteil im Zement bzw. Beton zu verringern, um CO2-Emissionen zu reduzieren. Zudem können zusätzliche Rohstoffquellen für die Produktion von Zement erschlossen werden.

Die DE 10 2016 005 285 B3 offenbart ein Verfahren zur Aktivierung von Tonen als Zusatzstoff für Beton, wobei der Ton zuerst in einer Zerkleinerungsstufe zerkleinert wird, und dann in einem Zyklon-Wärmetauscher mit mehreren Zyklonen aktiviert wird. Gemäß der DE 10 2011 014 498 A1 wird Ton zunächst gemahlen, und dann vorgewärmt und schließlich einem Kalzinierofen zugeführt. Gemäß der EP 2 429 966 B1 wird hitzebehandeltes Tonmaterial getrennt zermahlen. In der EP 2 253 600 A1 wird ein Zement mit Zementersatzstoffen, die separat wärmebehandelten Ton umfassen, offenbart.

Auch in der WO 2018/195624 A2 wird eine thermische Aktivierung von Ton offenbart.

Schließlich ist es aus der WO 2005/019129 A2 bekannt, dass bei der Zementherstellung sulfathaltiges Material in Form von Gips separat kalziniert und vorzerkleinert wird. In der CN 206 853 810 U wird eine Kohlenmühle in Form einer Wälzmühle mit Mahlschüssel und Mahlteller offenbart.

Es ist die Aufgabe der vorliegenden Erfindung ein vorteilhaftes Verfahren zum mechanochemischen Aktivieren eines Tongemischs bereitzustellen.

Die Erfindung stellt ein Verfahren zum mechanochemischen Aktivieren eines Tongemischs bereit, bei dem das Tongemisch in einer Mühle bei einer Temperatur gemahlen wird, wobei die Temperatur in einem Temperaturbereich von 300 °C (Grad Celsius) bis 1000 °C liegt. Insbesondere weist das Tongemisch die vorgenannte Temperatur während des Mahlens auf. Dies bewirkt ein thermomechanisches Aktivieren des Tongemischs. Durch das erfindungsgemäße Verfahren wird insbesondere eine Dehydroxylierung der im Tongemisch enthaltenen Schichtsilikate bewirkt. Schichtsilikate sind vornehmlich aus Silicium-(SiO₄-)Tetraeder-Schichten, Aluminium-(AlO₆-)Oktaeder-Schichten und/oder Magnesium-(MgO₆-)-Oktaeder-Schichten aufgebaut, die OH-Banden bzw. Hydroxyl-Gruppen aufweisen.

Bei der Dehydroxylierung werden diese OH-Banden bzw. Hydroxyl-Gruppen aus dem Schichtsilikat abgespalten, wodurch Wasser entsteht. Zusätzlich zu diesem chemischen Prozess wird das Wasser durch den Mahldruck beim erfindungsgemäßen Mahlen aus dem Tongemisch herausgedrückt und durch die hohen Temperaturen abgetrennt. Zudem findet eine teilweise Amorphisierung der Kristallstrukturen statt.

Im Ergebnis kommt es also zu einer thermisch unterstützten mechanochemischen Aktivierung des Tongemischs, so dass es beim Einsatz als Zementzusatzstoff oder Zementklinkerersatzstoff in erhöhtem Maße einer puzzolanen Reaktion zugänglich ist. Bei der puzzolanen Reaktion werden insbesondere Calcium-Silikat-Hydrate aus den freigesetzten, reaktiven Silicium-Ionen des aktivierten Tongemischs und dem Calciumhydroxid der Porenlösung des Zements gebildet.

Insbesondere wird das Tongemisch bei einer Temperatur in einem Temperaturbereich von 400 °C bis 1000 °C, weiter insbesondere bei einer Temperatur in einem Temperaturbereich von 450 °C bis 950 °C, vorteilhafterweise bei einer Temperatur in einem Temperaturbereich von 450 °C bis 600°C, weiter vorteilhafterweise bei einer Temperatur in einem Temperaturbereich von 500 °C bis 550°C gemahlen. Da die Partikel beim Mahlen des Tongemischs zerkleinert werden, kann eine größere Oberfläche für den Wärmeübergang von einen Heizmedium, insbesondere Heißgas, auf die Partikel ermöglicht werden. Zudem kann der Wärmeleitweg von der Oberfläche bis in das Innere der Partikel verringert werden. Damit können die Partikel schneller und mit geringerem Energieverbrauch erwärmt werden.

Zudem kann durch die größere Oberfläche der Partikel des Tongemischs das bei der mechanochemischen Aktivierung freiwerdende Wassers besser abgeleitet werden.

Je nach den Bestandteilen des Tongemischs kann das Mahlen in verschiedenen Temperaturbereichen erfolgen. Bei einer Temperatur in einem Temperaturbereich von 550 °C bis 700 °C wird eine vorteilhafte Aktivierung von Kaolinit ermöglicht. Bei einer Temperatur in einem Temperaturbereich von 800 °C bis 900 °C wird eine vorteilhafte Aktivierung von Montmorillonit ermöglicht. Bei einer Temperatur in einem Temperaturbereich von 900 °C bis 1000 °C wird eine vorteilhafte Aktivierung von Illit ermöglicht.

Insbesondere wird beim Mahlen des Tongemischs ein Mahldruck von größer als 350 kN (Kilo-Newton) pro Quadratmeter vorgesehen, und insbesondere von weniger als 2000 kN pro Quadratmeter. Vorteilhafterweise wird ein Mahldruck beim Mahlen des Tongemischs von 800 kN bis 1000 kN pro Quadratmeter vorgesehen.

In einer Ausführungsform ist die Mühle eine Vertikalwälzmühle, insbesondere eine Walzenschüsselmühle. Im Mahlbereich kann gezielt der erfindungsgemäße Temperaturbereich vorgesehen werden, insbesondere bei Vertikalwälzmühlen, bei welchen die nachfolgend beschriebenen, für einen Mahlbetrieb bei derartig erhöhten Temperaturen, vorteilhaften Gestaltungen vorgesehen werden können. In anderen Ausführungsformen kann das erfindungsgemäße Verfahren in einer Kugelmühle, Hammermühle, Walzenmühle, insbesondere Gutbettwalzenmühle, oder Rollenmühle erfolgen.

Insbesondere besteht das Tongemisch zu wenigstens 25 Massenprozent, vorteilhafterweise zu wenigstens 50 Massenprozent aus thermisch aktivierbaren Schichtsilikaten. Weiter vorteilhaft besteht das Tongemisch zu wenigstens 70 Massenprozent aus thermisch aktivierbaren Schichtsilikaten. In einer Ausführungsform des Verfahrens besteht das Tongemisch zu wenigstens 90 Massenprozent aus thermisch aktivierbaren Schichtsilikaten.

Insbesondere handelt es sich bei den Schichtsilikaten um Zweischichtsilikate, wie Kaolinit oder die Serpentingruppe, Dreischichtsilikate, wie Glimmer, Illit, Smektit, Montmorillonit, und/oder Vierschichtsilikate, wie die Dichloritgruppe. Schichtsilikate kommen in der Natur meist nicht reinphasig vor, sondern enthalten Begleitminerale wie Quarz und Feldspäte, die für das Aktivieren zuoder abträglich sein können.

Kaolinit besitzt eine dioktaedrische Zweischichtstruktur, bestehend aus SiO₄-Tetraedern und AlO₆-Oktaedern. An den äußeren Oktaederspitzen sitzen Hydroxylgruppen, die zu Sauerstoffatomen der nächsten Tetraeder-Schicht Wasserstoffbrückenbindungen aufbauen. Die freien Tetraederspitzen der SiO₄-Schicht verknüpfen zusammen mit OH-Gruppen der Oktaeder-Schicht die Al3⁺-Kationen der Oktaeder-Schicht und sättigen diese ab. Mit diesen zwei Mechanismen entsteht die Verbindung von jeweils einer Tetraeder-Schicht mit einer Oktaeder-Schicht. Bei der thermisch unterstützten mechanochemischen Aktivierung, vorteilhafterweise zwischen 450 °C bis 600 °C oder zwischen 550 °C bis 700 °C, werden im Rahmen der Dehydroxylierung Hydroxyl-Ionen aus der Oktaeder-Schicht abgespalten und die kristalline Struktur des Kaolinits wird in eine ungeordnete Struktur überführt.

Illit und Glimmer besitzen eine dioktaedrische, und seltener trioktaedrische, Dreischichtstruktur, welche aus einer AlO₆-Oktaeder-Schicht zwischen zwei SiO₄-Tetraeder-Schichten besteht. Die Verbindung der Dreischichtpakete erfolgt über K⁺-Ionen als Zwischenschichtkationen. Bei Illit kann das K⁺-Ion vorwiegend durch H₃O⁺-Ionen ersetzt sein. Im Gegensatz zu Kaolinit sind die Hydroxylgruppen zwischen den beiden SiO₄-Tetraeder-Schichten angeordnet. Dies bedingt auch die deutlich höhere Dehydroxilierungstemperatur für Illit vorteilhafterweise zwischen 900 °C und 1000 °C. Bei Glimmermineralien können verschiedene notwendige Aktivierungstemperaturen vorliegen. Bei Muskovit treten strukturelle Umwandlungen bereits bei 500 °C auf, während bei Paragonit bei 900°C noch keine Aktivierung auftritt.

Montmorillonit ist ein dioktaedrisches Dreischichtsilikat, das in einer Zwischenschicht mit austauschbaren Kationen und Wassermolekülen besetzt ist, und dessen optimale Aktivierungstemperatur zwischen 800 °C und 900 °C liegt.

Als Zementklinkerersatzstoff werden vorteilhafterweise Tongemische, die sich aus quarzhaltigen Tonen mit verschiedenen Anteilen an Schichtsilikaten und Begleitmineralien zusammensetzen, eingesetzt wegen der hohen weltweiten Verfügbarkeit. Vorteilhafterweise besteht das Tongemisch zu wenigstens 90 Massenprozent aus Tonmineralien, die einen hohen SchichtsilikatAnteil aufweisen. Bevorzugt werden Tongemische mit Tonmineralien, die insbesondere zur Kaolinitgruppe, Smektitgruppe oder zur Vermiculitgruppe gehören, oder Mischungen davon.

Insbesondere weist das Tongemisch einen Sulfatgehalt von weniger als 3 Massenprozent auf. Vorteilhafterweise weist das Tongemisch ein Sulfatgehalt von weniger als 2 Massenprozent auf. Beispielsweise kann das Tongemisch 1 Massenprozent an Sulfaten aufweisen. Insbesondere weist das Tongemisch dementsprechend geringe oder keine Anteile von Gips auf.

Insbesondere wird das Tongemisch in der Mühle gemahlen, und die Mühle wird kontinuierlich von Heißgas durchströmt. Nachdem das Heißgas einen nur geringen Feuchtigkeitsanteil aufweist, kann damit das im Tongemisch freiwerdende Wasser effektiv abgeführt werden, wodurch die mechanochemische Aktivierung beschleunigt wird. Das zugeführte Heißgas weist insbesondere eine Temperatur von 300 °C bis 1000 °C auf, vorteilhafterweise eine Temperatur zwischen 400 °C und 1000 °C, weiter vorteilhafterweise eine Temperatur zwischen 500 °C und 750 °C.

In einer Ausführungsform des Verfahrens wird der Mühle zusätzlich Kühlmedium, insbesondere Kühlluft oder Wasser bzw. Wasserdampf, zugeführt. Somit kann eine Erhitzung des Tongemischs ermöglicht werden, und gleichzeitig können temperaturkritische Bauteile der Mühle durch das Kühlmedium gekühlt werden. Das Kühlmedium kann insbesondere direkt auf zu kühlende Bauteile der Mühle außerhalb des Mahlraums zugeführt werden. Insbesondere kann eine Zementersatzmischung, die wenigstens 6 Massenprozent und maximal 90 Massenprozent eines Bindemittels umfasst, durch das vorangehend beschriebene erfindungsgemäße Verfahren hergestellt werden.

Insbesondere kann die Zementmischung wenigstens 6 Massenprozent eines Zementzusatzstoffes umfassen, der durch das vorangehend beschriebene erfindungsgemäße Verfahren hergestellt wurde. Insbesondere weist die Zementmischung höchstens 90 Massenprozent dieses Zementzusatzstoffes auf. Weiter insbesondere weist die Zementmischung höchstens 50 Massenprozent dieses Zementzusatzstoffes auf. Vorteilhafterweise weist die Zementmischung höchstens 35 Massenprozent dieses Zementzusatzstoffes auf. In einer Ausführungsform weist die Zementmischung höchstens 20 Massenprozent des Zementzusatzstoffes auf. In einer anderen Ausführungsform weist die Zementmischung wenigstens 21 Massenprozent des Zementzusatzstoffes auf.

Das der Mühle zugeführte Tongemisch ist insbesondere in Form eines partikelförmigen Schüttguts. Tone bestehen nach geologischer Nomenklatur insbesondere aus Mineralpartikeln kleiner 20 µm und einem silicatischen Tonmineralanteil mit Partikelgrößen kleiner 2 µm. Wenigstens 50 % der Partikel des der Mühle zugeführten Tongemischs haben insbesondere eine Größe zwischen 0,2 Mikrometer und 9 Mikrometer. Diese Partikel können zu Konglomeraten verbunden sein. Das der Mühle zugeführte Tongemisch hat insbesondere eine BET-Oberfläche zwischen 5 und 42 Quadratmeter pro Gramm.

Das Tongemisch weist vor dem Mahlen vorteilhafterweise Partikelgrößen von 2 Mikrometer bis 5 Mikrometer auf. Das erfindungsgemäße Mahlen dient somit insbesondere nicht vornehmlich dem Zerkleinern, sondern der mechanischen Unterstützung der chemischen Reaktion der Dehydroxylierung und weiterhin insbesondere der Amorphisierung der kristallinen Strukturen. Insbesondere können die Schichtsilikate des Tongemischs vor der erfindungsgemäßen Aktivierung ca. 13 bis 19 Massenprozent Kristallwasser aufweisen. Durch das erfindungsgemäße Mahlen kann insbesondere bereits durch eine geringere Zufuhr von Wärmeenergie eine Aktivierung des Tongemischs erfolgen, als bei der üblichen Erhitzung ohne Mahlvorgang wie im Stand der Technik gelehrt. Insbesondere kann durch den Einsatz eines während des Mahlens über das Tongemisch strömenden Heißgases eine effiziente Erwärmung des Tongemischs und schnelle Abfuhr von aus dem Tongemisch freiwerdendem Wasser erfolgen, was die Effizienz der Aktivierung erhöht.

Der Betrieb einer Wälzmühle bei der vorgenannten hohen Temperatur zwischen 300 °C und 1000 °C zur Durchführung des erfindungsgemäßen Verfahrens führt zu einer hohen thermischen Beanspruchung der Mühle.

Die vorliegende Erfindung stellt weiterhin eine Wälzmühle, insbesondere zum thermisch unterstützen mechanochemischen Aktivieren eines Tongemischs, bereit, wobei die Wälzmühle einen Antrieb, eine Mahlschüssel, einen Mahlteller und Mahlwalzen umfasst. Die Mahlschüssel ist auf dem Antrieb angeordnet, wobei der Antrieb ausgelegt ist, die Mahlschüssel anzutreiben, sodass die Mahlwalzen auf dem Mahlteller abrollen. Erfindungsgemäß sind Öffnungen im Randbereich der Mahlschüssel vorgesehen, um den Durchfluss von Kühlmedium zu ermöglichen. Vorteilhafterweise sind die Öffnungen im unteren Bereich der Mahlschüssel vorgesehen, um den Eintritt von Kühlmedium in das Innere der Mahlschüssel zu ermöglichen. In einer anderen vorteilhaften Ausführungsform können die Öffnungen im oberen Bereich der Mahlschüssel vorgesehen sein, insbesondere in einem Bereich unter der Auflagefläche für die Mahlteller. Damit kann die thermische Beanspruchung der Mühle reduziert werden. Das Kühlmedium wird insbesondere durch die Mahlschüssel geführt, um besonders hitzegefährdete Bereiche zu kühlen, vornehmlich Bereiche mit geringen Materialstärken, empfindlichen Bauteilen oder Bereiche, die einer hohen Wärmeleistung ausgesetzt sind. Vorteilhafterweise wird dadurch eine Vergleichmäßigung der Temperaturniveaus erreicht.

In einer Ausführungsform ist die Wälzmühle eine Vertikalwälzmühle, insbesondere eine Walzenschüsselmühle. Die Wälzmühle weist insbesondere einen Sichter auf, der lediglich Partikel, die einen gewissen Feinheitsgrad erreicht haben, aus der Mühle auslässt. Zu grobe Partikel werden einem weiteren Mahlvorgang zugeführt.

Der Kühlmediumeintritt ermöglicht, dass die Mahlschüssel insbesondere in ihrem unteren Bereich gezielt gekühlt wird. Dadurch kann die Wärmeübertragung in den darunter angeordneten Antrieb reduziert werden. Insbesondere umfasst der Antrieb einen Antriebsmotor und ein Getriebe. Die Mahlschüssel ist vorteilhafterweise auf einem Getriebeflansch angeordnet. Durch die Öffnungen kann nicht nur Kühlmedium in das Innere der Mahlschüssel eingebracht werden, um dort eine vorteilhafte Kühlung zu ermöglichen, sondern ein besonderer Kühleffekt tritt im Bereich der Öffnungen auf. Vorteilhafterweise sind mehrere Öffnungen entlang der Umfangsrichtung vorgesehen, sodass vorteilhafterweise ein Umfangsbereich mit einer erhöhten Kühlwirkung in der Mahlschüssel vorgesehen wird, so dass eine Wärmeleitung durch diesen Bereich hin zum Antrieb reduziert wird.

In einer vorteilhaften Ausführungsform weist die Mahlschüssel eine Aufstandsfläche auf, mit der die Mahlschüssel auf dem Antrieb aufsteht, wobei die Öffnungen als Ausschnitte in der Aufstandsfläche der Mahlschüssel vorgesehen sind. Die Öffnungen sind also zur Aufstandsfläche offen ausgeführt. Damit kann die Wärmeleitfläche zwischen der Mahlschüssel und dem Antrieb reduziert werden. Zusätzlich zur gezielten Kühlwirkung kann somit die Wärmeleitung zwischen Mahlschüssel und Antrieb verringert werden, so dass trotz der hohen Temperaturen im Inneren der Wälzmühle nur ein geringer Wärmebertrag auf deren Antrieb stattfindet. Zudem wird dadurch auch gleichzeitig ermöglicht, Kühlmedium direkt auf den Getriebeabtriebsflansch zu leiten, und damit diesen gezielt zu kühlen. Somit findet in diesem Bereich Kühlung durch erzwungene Konvektion statt, und die Konduktion von Wärme von der Mahlschüssel in den Antrieb, und insbesondere in dessen Getriebe, wird reduziert. Insbesondere sind die Öffnungen als gleichmäßig beabstandete, arkadenförmige Öffnungen in der unteren Aufstandsfläche der Mahlschüssel vorgesehen.

Insbesondere wird der obere Bereich des radial außenliegenden Kragens der Mahlschüssel mit Heißgas bestrichen. Damit wird die Erwärmung der Mahlschüssel ist auf ein das kleines Maß beschränkt.

Des Weiteren wird über den einen Verschleißbereich bildenden Mahlteller im oberen Bereich der Mahlschüssel Wärme eingetragen. Um diesen Wärmeeintrag zu reduzieren, kann das wenigstens eine oder mehrere Verschleißteile, die den Mahlteller bilden, nur teilweise, insbesondere über stegförmige Bereiche aufliegen, um den Wärmeübergang durch Wärmeleitung zu reduzieren. Die nicht aufliegenden Bereiche können mit einer Wärmedämmung, vorzugsweise aus Mineralwolle, versehen oder ausgefüllt sein, um auch dort den Wärmeübergang zu reduzieren.

In einer vorteilhaften Ausführungsform weist die Mahlschüssel eine Kühlung auf, welche zu einer Vergleichmäßigung der Temperatur der verschiedenen Bereiche der Mahlschüssel führt, insbesondere der Bereiche, welche durch die Mahlkraft und/oder durch Wärmespannungen mechanisch hoch beansprucht sind. Zudem kann die Bauteiltemperatur in einem Bereich gehalten werden, bei welchem das Bauteilmaterial ausreichend Festigkeit und Gefügebeständigkeit aufweist.

Insbesondere kann die Mahlschüssel mit wenigstens einem Kühlkanal oder mehreren Kühlkanälen versehen sein, welche ein Kühlmedium gezielt in die beanspruchten Bereiche führen. Die Kühlkanäle können insbesondere in den weniger beanspruchten Bereichen angeordnet werden, und werden mit einem Kühlmedium durchströmt, das in die beanspruchten Bereiche geleitet wird. Dieses Kühlmedium kann gasförmig oder flüssig sein und entweder im Druck- oder Unterdruckbetrieb gefördert werden.

Das Kühlmedium kann im Außenbereich der Mahlschüssel über eine Zuführleitung oder direkt aus der Umgebungsluft der Mühle zugeführt werden.

Vorteilhafterweise wird das Kühlmedium im zu kühlenden Bereich gleichmäßig ringförmig verteilt.

Das Kühlmedium durchströmt vorteilhafterweise einen ringförmigen Bereich zwischen einem unterhalb des Mahlraums angeordneten Heißgasraum und einem unteren zylindrischen oder kegeligen Teil der Mahlschüssel.

Vorteilhafterweise ist der dem Heißgasraum zugewandte Teil des Kühlkanals mit einer Wärmedämmung versehen, um dort nur geringe Wärmemengen zu übertragen, sei es durch Konvektion auf das Kühlmedium oder durch Wärmestrahlung der heißen Wand.

Besonders vorteilhaft ist es, wenn das Kühlmedium in einen den Mahlteller bildenden plattenförmigen oberen Teil der Mahlschüssel am äußeren Rand eintritt und im inneren Bereich austritt. Damit wird der üblicherweise heißere Teil des Mahltellers besser gekühlt als der typischerweise kühlere radial innenliegende Teil. Die radialen Temperaturunterschiede in der Mahlschüssel werden damit reduziert, vorteilhafterweise im Wesentlichen ausgeglichen. Insgesamt wird damit die Temperatur abgesenkt, so dass die Beanspruchung durch Wärmespannungen reduziert wird und auch mögliche Gefügeprobleme im Mahlschüsselwerkstoff vermieden werden.

Eine weitere Wirkung ist die höhere Festigkeit des Werkstoffs bei den geringeren Temperaturen.

Das erwärmte Kühlmedium kann innerhalb des von der Mahlschüssel umschlossenen Raums nach unten gefördert werden, und im unteren Bereich durch eine oder mehrere Öffnungen wieder austreten, insbesondere aus einem Ringkanal um den unteren Bereich der Mühle. Diese Öffnungen in der Mahlschüsselhalswand sowie die innere Wandung des Mahlschüsselhalses werden vorteilhafterweise thermisch isoliert, um keine thermischen Ungleichmäßigkeiten im Mahlschüsselhals zu verursachen, sowie um die Wärmelast für den Antrieb zu reduzieren.

Das Kühlmedium wird dann nach außerhalb der Mühle abgefördert und gegebenenfalls weiterer Verwendung zugeführt, beispielsweise einer Wärmerückgewinnung oder insbesondere im Fall von Umgebungsluft als Prozessgas einem Brenner eines Heißgaserzeugers zugeführt.

Insbesondere umfasst die Wälzmühle eine Mahlschüssel, auf deren äußerem Umfang wenigstens bereichsweise ein Wärmeisolationselement vorgesehen ist. Insbesondere kann das Wärmeisolationselement eine Wärmeisolierungsbeschichtung außen auf der Mahlschüssel sein. Alternativ oder zusätzlich kann das Wärmeisolationselement eine außen auf der Mahlschüssel aufgebrachte Wärmeschutzplatte sein. Insbesondere wird die wenigstens eine Wärmeschutzplatte von außen auf die Mahlschüssel aufgeschraubt. In einer Ausführungsform der Wälzmühle wird Heißgas außen an der Mahlschüssel vorbei in den Mahlraum eingeblasen. Das wenigstens eine Wärmeisolationselement verhindert somit eine übermäßige Erwärmung der Mahlschüssel, und damit des Antriebs. Insbesondere ist das wenigstens eine Wärmeisolationselement überwiegend in der oberen Hälfte der Mahlschüssel vorgesehen. Insbesondere ist ein unterer Bereich der Mahlschüssel frei von Wärmeisolationselementen.

Insbesondere ist wenigstens eine lokale Düse zum Zuführen von Kühlmedium im Innenraum der Wälzmühle vorgesehen. Die lokale Düse ermöglicht, dass besonders erhitzte Bereiche oder besonders hitzeempfindliche Bereiche lokal gekühlt werden können. Bei dem Kühlmedium kann es sich insbesondere um Kühlluft handeln. In anderen Ausführungsformen ist es aber auch möglich Wasser als Kühlmedium zu verwenden, um sich die Verdampfungsenthalpie zur Erzeugung von zusätzlicher Kühlleistung zu Nutze zu machen. Dabei erfolgt vorteilhafterweise eine Einbringung von Wasser möglichst nur so, dass die Feuchtigkeit im Bereich des Mahlguts nicht erhöht wird.

Insbesondere ist lokal wenigstens eine Kühlleitung vorgesehen, die von einem Kühlmittel durchflossen wird. Insbesondere wird das Kühlmittel durch die wenigstens eine Kühlleitung gepumpt.

Durch die lokale Düse kann eine Schleierkühlung oder Filmkühlung bewirkt werden. Alternativ oder zusätzlich ist es möglich eine Prallkühlung vorzusehen, wobei das Kühlmedium ein direktes Auftreffen von heißen Fluiden auf das zu kühlende Bauteil verhindert. In einer Ausführungsform kann lediglich ein Teilstrom des Kühlmediums verwendet werden, beispielweise erzeugt durch einen engen Dichtspalt mit Freistrahlwirkung. Dafür kann eine Druckerhöhung im Kühlmedium auf wenigstens 2 bar, vorteilhafterweise auf 4 bar bis 8 bar vorteilhaft erfolgen. Die Kühldruckluft kann durch eine separate Kühlstromleitung an eine Mahlschüssel- und/oder Walzendichtung herangeführt werden.

Insbesondere ist wenigstens ein Hitzeschild, insbesondere in Form eines Hitzeschutzblechs, vor wenigstens einem Heißgasaustritt vorgesehen.

Durch den Hitzeschild kann ermöglicht werden, dass das in die Mühle einströmende Heißgas verteilt wird, und eine lokale Erhitzung reduziert wird. Der Hitzeschild ist vorteilhafterweise um den ganzen Umfang des Heißgasraums vorgesehen. Der Hitzeschild kann den Heißgasraum von einem Raum für Kühlmedium abgrenzen. Der Hitzeschild kann ein Wärmeisolationselement aufweisen oder aus diesem bestehen.

Insbesondere ist die Mahlwalze auf einer Mahlwalzenachse drehbar gelagert, und Kühlmedium wird durch die oder entlang der Mahlwalzenachse zugeführt. Zusätzlich zu einer lokalen Kühlung der gegebenenfalls wärmeempfindlichen Mahlwalzenlagerungen, verhindert die Kühlmediumzufuhr, dass durch das Mahlen erzeugter Staub die Mahlwalzenlagerung verunreinigt. Insbesondere ist wenigstens eine Kühlmediumöffnung axial in Richtung des Mühleninnerens vor der Walzenabdichtung angeordnet. Damit kann verhindert werden, dass Staub zu der Mahlwalzenlagerung gelangt. Alternativ oder zusätzlich kann wenigstens eine Kühlmediumöffnung zwischen voneinander axial beabstandeten Mahlwalzenlagern angeordnet sein. Damit wird im vorteilhafterweise wenigstes teilabgedichteten Lagerbereich ein höherer Druck sowie ein Luftfluss aus dem Lagerbereich heraus erzeugt. Dadurch wird weitergehend verhindert, dass Staub in die Mahlwalzenlagerungen eindringt. Alternativ oder zusätzlich können die Lager über eine Ölkühlung gekühlt werden.

Die Mahlschüssel und der Mahlteller können integral ausgeführt sein. Alternativ kann der Mahlteller auch als separates Bauteil mit der Mahlschüssel verbunden werden.

Insbesondere wird der Mahlteller durch ein elastisches Element auf der Mahlschüssel befestigt, wobei das elastische Element ausgelegt ist, unterschiedliche Wärmeausdehnungen zwischen dem Mahlteller und der Mahlschüssel auszugleichen. Insbesondere umfasst das elastische Element einen elastisch gelagerten Stift oder ein elastisch gelagertes Klemmelement. Nachdem der Mahlteller und die Mahlschüssel beispielsweise aufgrund von unterschiedlichen Festigkeitsanforderungen gegebenenfalls aus unterschiedlichen Materialien gefertigt sind, kann es zu unterschiedlichen Wärmeausdehnungen kommen, die zu mechanischen Belastungen führen könnten. Dies wird mit einer derartigen Gestaltung ausgeglichen.

Die Wälzmühle kann einen Düsenring umfassen, der sich radial außerhalb des Mahltellers erstreckt, wobei der Düsenring durch ein elastisches Element am Mühlengehäuse befestigt ist, wobei das elastische Element ausgelegt ist, unterschiedliche Wärmeausdehnungen zwischen dem Düsenring und dem Mühlengehäuse auszugleichen. Insbesondere umfasst das elastische Element einen elastisch gelagerten Stift oder ein elastisch gelagertes Klemmelement. Nachdem der Mahlteller und der Düsenring, beispielsweise aufgrund von unterschiedlichen Festigkeitsanforderungen, gegebenenfalls aus unterschiedlichen Materialien gefertigt sind, kann es zu unterschiedlichen Wärmeausdehnungen kommen, die zu mechanischen Belastungen führen könnten. Dies wird mit einer derartigen Gestaltung ausgeglichen.

Das Mühlengehäuse kann von außen und/oder innen isoliert sein, um Wärme im Prozess zu halten. Eine Isolierung innen im Mühlengehäuse ist vorteilhafterweise als hitzebeständige Panzerung ausgeführt. Dies ermöglich dann aber auch einen Schutz des Gehäusewerkstoffs vor Hitze. Hier kann auch eine Ausmauerung zum Einsatz kommen. Insbesondere kann eine Panzerung innen am Mühlengehäuse vorgesehen sein, und eine Isolierung außen am Mühlengehäuse vorgesehen sein. Alternativ kann eine Isolierung innen am Mühlengehäuse vorgesehen sein, und eine Panzerung innen an der Isolierung vorgesehen sein.

In der Wälzmühle können Gleitringdichtungen vorgesehen sein. Dies ermöglicht, dass die Verwendung von hitzeempfindlichen Elastomeren vermieden werden kann.

In der Wälzmühle können insbesondere im Bereich von Gleitflächen und Lagern Keramikwerkstoffe eingesetzt werden.

Insbesondere ist die Wälzmühle so ausgelegt, dass Heißgas einer ersten Temperatur in das Mühleninnere zugeführt wird, und zusätzlich lokal Heißgas im Mühleninneren einer zweiten Temperatur zugeführt wird, wobei die zweite Temperatur höher als die erste Temperatur ist. Insbesondere besteht ein Temperaturunterschied zwischen der ersten Temperatur und der zweiten Temperatur von wenigstens 100 °C. Dies ermöglicht insbesondere, die erforderliche Temperatur stufenweise zu erreichen und dabei lokale Temperaturmaxima zu vermeiden oder zu reduzieren, die absolute Temperatur gering zu halten und dennoch lokal, insbesondere im Mahlbereich, die gewünschte hohe Temperatur zu erreichen. Zudem kann damit die notwendige Temperatur im Mahlbereich konstant gehalten werden. Im Mahlbereich findet ein hoher Umsatz des Tongemischs statt, das zunächst auf die gewünschte Temperatur gebracht werden muss und dem Heißgas Wärme für die Aktivierungsenergie des Tongemischs entnimmt. Die Temperatur wird vorteilhafterweise auf einem hohen Wert gehalten werden, bis das abgespaltene Wasser aus dem Tongemisch diffundiert ist. Dabei kann das Heißgas wenigstens teilweise in einem inneren Umlauf in der Mühle gehalten werden. Jedoch sollte ausreichend Heißgas aus der Mühle ausgeführt werden, um das abgespaltene Wasser aus der Müle auszutragen. Insbesondere kann ein Nachbrenner im Bereich des Düsenrings vorgesehen werden, um die Temperatur des Heißgases vor dem Sichter hoch zu halten.

Insbesondere ist das Gehäuse der Wälzmühle segmentiert und mit Dehnfugen ausgestaltet. Die Abstützung des Sichters kann separat vom Gehäuse ausgeführt sein. Damit können unterschiedliche Wärmeausdehnungen kompensiert werden.

Das Gehäuse der Mühle ist vorteilhafterweise aus einem hochwarmfesten, insbesondere austenitischen, Stahl gefertigt.

Der Düsenring ist vorteilhafterweise aus einem hochwarmfesten, insbesondere austenitischen, Stahl gefertigt.

Die Mahlschüssel und/oder die Walzengrundkörper sind insbesondere aus Eisenguss gefertigt. In anderen Ausführungsformen können die Mahlschüssel und/oder die Walzengrundkörper aus Stahl, vorteilhafterweise aus einem hochwarmfesten, insbesondere austenitischen, Stahlguss gefertigt sein.

Insbesondere ist in der Wälzmühle ein Kühlmantel mit erzwungener Konvektion um das Mühlengehäuse herum vorgesehen. Die Kühlung kann insbesondere aktiv durch einen Ventilator erfolgen. Zusätzlich oder alternativ kann die Kühlung passiv durch einen Kamineffekt in dem Kühlmantel erfolgen.

In einer Ausführungsform kann eine direkte und/oder indirekte Wasserkühlung vorgesehen sein, durch Einspritzen und/oder Durchführen von Wasser in Leitungen.

Insbesondere können Kühlkanäle unterhalb des Mahlbereichs vorgesehen sein.

In einer Ausführungsform kann für die Mahlteller, Mahlschüssel und/oder den Walzengrundkörper wenigstens bereichsweise Keramik zum Einsatz kommen.

Für die Mahlwalzen kann eine gesonderte Luftkühlung durch Einblasen von Kühlmedium oder eine Wasserkühlung, direkt durch Einspritzen von Wasser oder indirekt durch Durchleiten von Wasser, vorgesehen sein.

In einer Ausführungsform kann die Walzenwelle außerhalb des Gehäuses drehgelagert sein. Damit können die Lagerungen vor der Hitze im Gehäuse geschützt werden.

Die Lagerung des Sichterrotors kann außerhalb des Gehäuses vorgesehen sein. Alternativ kann eine Lagerungskühlung des Sichterrotors im Gehäuse vorgesehen sein, beispielsweise durch Kühlluft oder eine Wasserkühlung.

Die Wälzmühle, die insbesondere gemäß einer der vorangehenden Gestaltungen ausgestaltet ist, kann zum thermomechanischen Aktivieren eines Tongemischs verwendet werden. Insbesondere kommt es dabei zu einer mechanochemischen Reaktion von Schichtsilikaten im Tongemisch, vorteilhaft gefördert durch die mechanische Einwirkung durch die Mühle. Die Verwendung kann die Durchführung des erfindungsgemäßen Verfahrens gemäß einer der vorgenannten Ausführungsformen umfassen.

Vorteilhafterweise wird das erfindungsgemäße Verfahren kontinuierlich betrieben, also mit im Wesentlichen durchgängigen, insbesondere im Wesentlichen konstanten Tongemischdurchsatz. Dabei kann eine Rückführung von Partikeln des Tongemischs durch den Sichter stattfinden, indem nur Partikel mit einem bestimmten Feinheitsgrad aus der Mühle abgeführt werden, zu grobe Partikel jedoch wenigstens einem weiteren Mahlvorgang unterzogen werden. Weiterhin kann eine teilweise Rückführung von aus der Mühle abfließendem Heißgas zur Heißgaszuführung der Mühle erfolgen. Dies ermöglicht Energieeinsparung durch Wärmerückführung. Vorteilhafterweise wird aber wenigstens ein Teil des aus der Mühle abfließenden Heißgases abgeführt, und nicht zurückgeführt, um Feuchtigkeit aus der Mühle abzuführen. Im Folgenden wird die Erfindung anhand von beispielhaften Ausführungsformen weitergehend erläutert, die in den folgenden Figuren dargestellt sind. Dabei zeigen:
- Fig. 1: eine perspektivische Ansicht einer Wälzmühle gemäß einer Ausführungsform der vorliegenden Erfindung;
- Fig. 2: eine partielle Schnittansicht einer Wälzmühle gemäß einer Ausführungsform der vorliegenden Erfindung;
- Fig. 3: eine partielle Schnittansicht einer Wälzmühle gemäß einer Ausführungsform der vorliegenden Erfindung;
- Fig. 4: eine partielle Schnittansicht einer Wälzmühle gemäß einer Ausführungsform der vorliegenden Erfindung;
- Fig. 5: eine partielle Schnittansicht einer Wälzmühle gemäß einer Ausführungsform der vorliegenden Erfindung; und
- Fig. 6: eine partielle Schnittansicht einer Wälzmühle gemäß einer Ausführungsform der vorliegenden Erfindung.

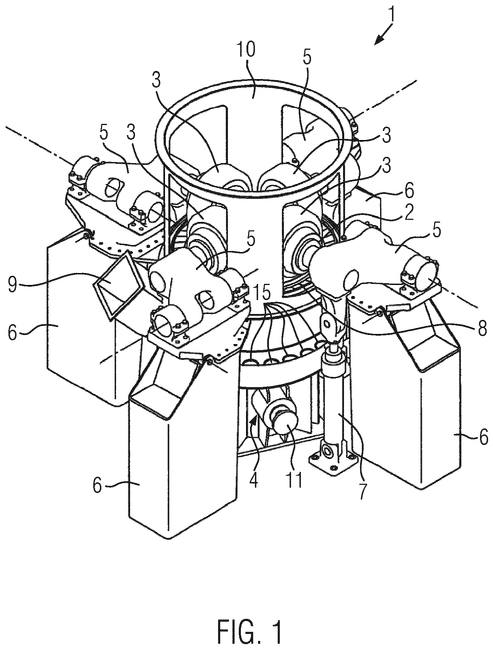

In Figur 1 ist eine Wälzmühle 1 gemäß einer beispielhaften Ausführungsform der Erfindung dargestellt. Die Wälzmühle 1 weist einen Mahlteller 2 und vier Mahlwalzen 3 auf. Der Mahlteller kann integral als Ring ausgeführt sein, oder aus Ringsegmenten gebildet werden. Der Mahlteller 2 wird um seine vertikale Mittelachse durch einen Antrieb 4 angetrieben. Die Mahlwalze 3 ist um eine Walzendrehachse drehbar in einem Schwinghebel 5 gelagert. Der Schwinghebel 5 ist um eine Lagerachse verschwenkbar in einer Konsole 6 gelagert. Die Konsole 6 ist direkt im Fundament befestigt. Weiterhin können Hydraulikzylinder 7 vorgesehen sein, die beabstandet von der Lagerachse des Schwinghebels mit dem Schwinghebel 5 verbunden sind. Mit dem Hydraulikzylinder kann ausgehend vom Fundament eine Kraft auf den Schwinghebel 5 aufgebracht werden. Dies kann zum Ausschwenken der Mahlwalzen 3 aus dem Eingriff mit dem Mahlteller 2 dienen, oder aber zur Einstellung der Normalkraft zwischen der jeweiligen Mahlwalze 3 und dem Mahlteller 2.

Auf den Mahlteller 2 wird partikelförmiges Schüttgut eingebracht, sodass es zwischen den Mahlwalzen 3 und dem Mahlteller 2 gemahlen wird. Dann wird das gemahlene Schüttgut durch einen über radial außerhalb des Mahltellers 2 angeordneten Düsenring 8 einem Luftstrom ausgesetzt. Der Luftstrom führt das gemahlene Schüttgut einem nicht dargestellte Sichter zu, der grobe Bestandteile wieder zurück auf den Mahlteller 2 führen kann und ausreichend feine Partikel aus der Wälzmühle 1 abführt. Gemäß der vorliegenden Erfindung handelt es sich bei dem partikelförmigen Schüttgut insbesondere um ein Tongemisch. Zum mechanochemischen Aktivieren des Tongemischs wird dieses bei einer Temperatur von minimal 300 °C und maximal 1000 °C gemahlen. Insbesondere weist die Wälzmühle 1 einen Lufteintritt, der eine Heißgaszuleitung 9 bildet, auf, mit der Heißgas in die Mühle eingebracht wird. Das Heißgas strömt insbesondere durch die Heißgaszuleitung 9 und dann durch den Düsenring 8 in das Innere des Gehäuses 10. Das Gehäuse 10 der Mühle ist vorliegend der Übersichtlichkeit halber in Figur 1 mit großen Öffnungen dargestellt. Es ist aber bevorzugt, dass das Gehäuse im Wesentlichen geschlossen ist, und insbesondere von außen und/oder innen mit einer Isolierungsschicht versehen, um Wärme im Prozess zu halten.

Insbesondere können Dichtungen im Bereich der Durchtritte der Achsen der Mahlwalzen 3 durch das Gehäuse 10 vorgesehen sein. Alternativ oder zusätzlich kann eine Sperrluftabdichtung mit heißem Prozessgas erfolgen. Der Antrieb 4 der Wälzmühle 1 umfasst einen Antriebsmotor 11 und ein Antriebsgetriebe 12. Der Mahlteller 2 ist auf einer Mahlschüssel 13 angeordnet, die ein im Wesentlichen hohles Bauteil mit einer Wand in Umfangsrichtung ist, und im oberen Bereich mit einer flanschartigen Auflagefläche 14 für den Mahlteller 2 versehen ist. Im unteren Bereich der Mahlschüssel 13 sind Kühlmediumöffnungen 15 vorgesehen. Zudem kann optional auch im unteren Bereich der Mühle um die Mahlschüssel herum 13 ein in Fig. 1 nicht dargestelltes Gehäuse vorgesehen sein, über das Kühlmedium zu den Kühlmediumöffnungen 15 zugeführt werden kann. Alternativ kann kühlende Umgebungsluft einströmen. Das Kühlmedium kann insbesondere aufgrund eines Unterdrucks im Inneren der Mahlschüssel 13 durch die Kühlmediumöffnungen 15 in die Mahlschüssel 13 eingesaugt werden. Alternativ kann das Kühlmedium unter Druck gefördert werden, beispielsweise durch ein Gebläse. Alternativ oder zusätzlich kann die Kühlluft durch eine Absaugvorrichtung abgesaugt werden.

Insbesondere weist die Mahlschüssel 13 eine Aufstandsfläche 16 auf, wobei die Kühlmediumöffnungen 15 als Unterbrechungen in der Aufstandsfläche 16 vorgesehen sind. Die Mahlschüssel 13 steht mit der Aufstandsfläche 16 auf einer oberen Fläche des Antriebsgetriebes 12 auf. Somit ermöglichen die Kühlmediumöffnungen 15 nicht nur, dass Kühlmedium in das Innere der Mahlschüssel 13 eintreten kann, sondern auch, dass die Kontaktfläche zwischen Mahlschüssel 13 und Antriebsgetriebe 12 reduziert wird, sodass nur eine geringere Wärmekonduktion zwischen der Mahlschüssel 13 und dem Antriebsgetriebe 12 auftreten kann.

Somit kann das Antriebsgetriebe 12 besser vor hohen Temperaturen geschützt werden. Auf dem äußeren Umfang der Mahlschüssel 13 ist wenigstens ein Wärmeisolationselement 17 angeordnet. Dabei kann es sich insbesondere um eine isolierende und wärmeresistente Schicht handeln, die außen auf dem Umfang der Mahlschüssel 13 wenigstens bereichsweise befestigt ist. Weiterhin kann ein Hitzeschild in Form einer Prallplatte 18 vor einem Austritt aus der Heißgaszuleitung 9 vorgesehen sein, die das aus der Heißgaszuleitung 9 ausströmende Heißgas zum Düsenring 8 umleitet. Damit trifft das Heißgas nicht direkt auf die Mahlschüssel 13 bzw. deren Wärmeisolationselement 17 auf.

Das dem Inneren der Mahlschüssel 13 zugeführte Kühlmedium kühlt nicht nur die Mahlschüssel 13 von innen und die Oberseite des Antriebsgetriebes 12, sondern kann auch im oberen Bereich aus der Mahlschüssel 13 abgeführt werden, und im Mühleninneren eine weitere Kühlwirkung entfalten. Insbesondere können dafür Öffnungen oder wenigstens eine lokale Düse 19 in der Mahlschüssel 13 vorgesehen sein. Damit kann beispielsweise das Kühlmedium auf die Mahlwalzen 3 gerichtet werden. Die Düse 19 rotiert insbesondere mit der Mahlschüssel 13. Alternativ oder zusätzlich kann auch in einem anderen Bereich der Wälzmühle wenigstens eine lokale Düse 20 vorgesehen sein, beispielsweise im oberen Bereich der Mahlwalzen 3, um diese zu kühlen. Dabei bleibt die Düse 20 ortsfest. Die Düse 20 wird mit einer Kühlmediumleitung ohne Mahlschüsselkontakt versorgt.

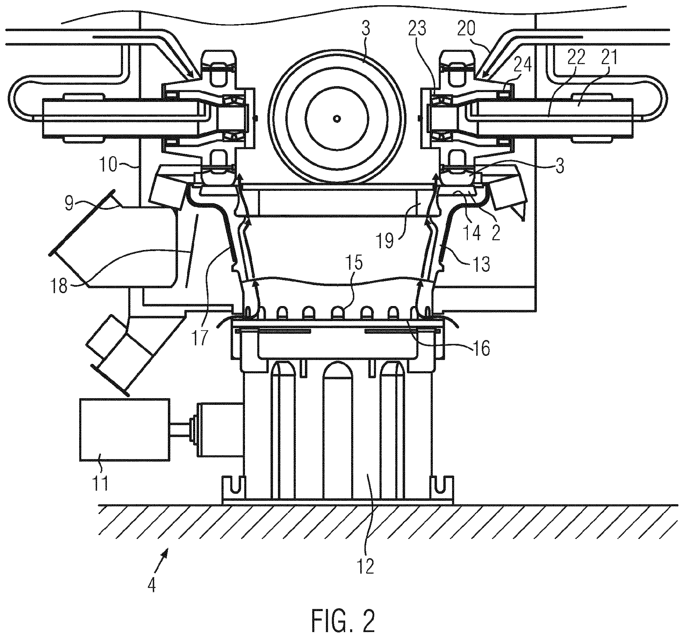

Die Mahlwalze 3 ist auf einer Mahlwalzenachse 21 gelagert, wobei Kühlmedium durch eine Leitung 22 bis zwischen die Lager 23, 24 der Mahlwalze 3 gefördert wird. Als Kühlmedium kann Öl zum Einsatz kommen. Alternativ oder zusätzlich kann, wie in Fig. 2 dargestellt, die Leitung 22 Kühlmedium bis an eine Position zwischen dem inneren Lager 23 und dem Mühleninneren zuführen. Damit kann das Lager 23 nicht nur gekühlt werden, sondern das Kühlmedium schützt das Lager 23 auch vor Staubeintrag aus dem Mühleninneren. Hierfür kann insbesondere Kühlluft als Kühlmedium zum Einsatz kommen. Alternativ zur Leitung 22 ist es möglich, das Kühlmedium im äußeren Bereich entlang der Mahlwalzenachse 21 entlangzuführen. Eine Kühlung der Lager 22, 23 kann auch durch Wasserkühlung mittels Drehdurchführung im Lagerdeckel und/oder separaten Kanälen in der Lagerbuchse erfolgen.

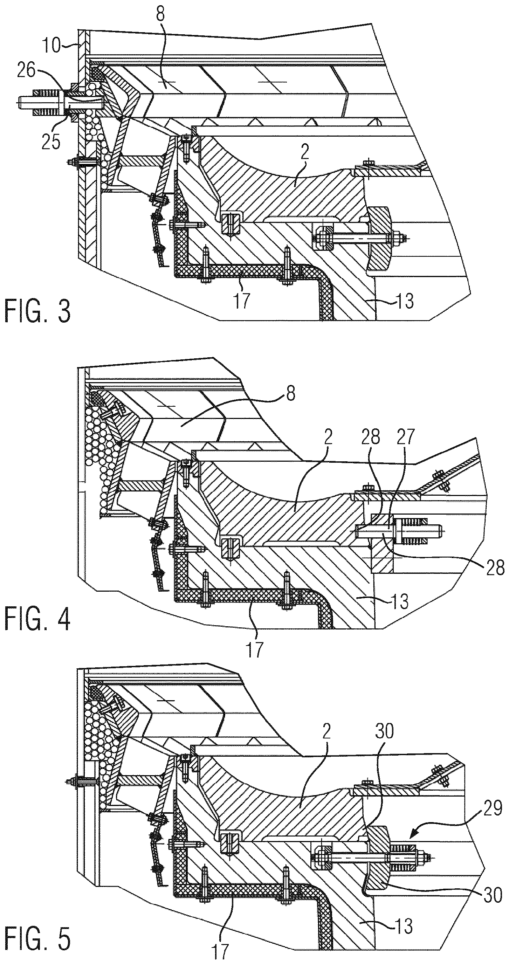

In Figur 3 ist eine erfindungsgemäße, hitzeoptimierte Lagerung des Düsenrings 8 dargestellt. Insbesondere ist dafür ein elastisches Element 25 mit einem elastisch gelagerten Stift vorgesehen, der in eine Ausnehmung 26 des Düsenrings 8 eingreift. Wenn sich nun der Düsenring 8 aufgrund von Erwärmung stärker ausdehnt als das Gehäuse 10, kann dies durch die elastische Lagerung des Stifts 25 kompensiert werden. Insbesondere ist der Stift nur in Radialrichtung des Düsenrings 8 verschieblich. Die Vorspannung kann durch eine Feder bewirkt werden, die auf den Stift eine Kraft radial nach innen aufbringt. Vorteilhafterweise sind mehrere elastische Elemente 25 mit gleicher Vorspannung in gleichmäßigem Abstand um den Umfang des Düsenrings 8 verteilt, und zwar mindestens drei elastische Elemente 25. Damit wird nicht nur die die Möglichkeit des Ausgleichs unterschiedlicher Wärmeausdehnungen erreicht, sondern auch eine Zentrierung des Düsenrings.

In einer weiteren Ausführungsform, die in Figur 4 dargestellt ist, ist der Mahlteller 2 durch ein elastisches Element 27 bzgl. der Mahlschüssel 13 gelagert. Bei dem elastischen Element 27 handelt es sich insbesondere um einen Stift, der mittels einer elastischen Kraft in eine Ausnehmung 28 des Mahltellers 2 eingreift. Insbesondere ist der Stift elastisch durch eine Feder vorgespannt. Der Stift erstreckt sich vornehmlich in radialer Richtung des Mahltellers 2. Im dargestellten Ausführungsbeispiel greift der Stift radial nach außen gerichtet in die Ausnehmung 28 des Mahltellers 2 ein. In einer anderen Ausführungsform kann ein Eingreifen eines elastischen Elements nach radial innen in eine nach radial außen geöffnete Ausnehmung des Mahltellers 2 erfolgen.

In Figur 5 ist eine weitere Ausführungsform dargestellt, wobei hier das elastische Element 29 ein Klemmelement aufweist, das eine elastische Kraft auf eine radiale Seitenfläche 30 des Mahltellers 2 aufbringt. Insbesondere kann die Seitenfläche 30 gegenüber der Axialrichtung des Mahltellers 2 geneigt sein, um auch eine Haltekraft in Axialrichtung bereitzustellen. Im dargestellten Ausführungsbeispiel ist die Seitenfläche 30 radial innen am Mahlteller 2 vorgesehen. In anderen Ausführungsbeispielen kann das Klemmelement und die Seitenfläche 31 aber auch radial außen am Mahlteller 2 vorgesehen sein. Insbesondere ist das elastische Element 29 an mehreren Positionen in Umfangsrichtung zur Befestigung des Mahltellers 2 vorgesehen, insbesondere an mindestens drei Positionen.

Durch die elastischen Elemente 27 oder 29 kann nicht nur ein Ausgleich von unterschiedlichen Wärmeausdehnungen zwischen Mahlteller 2 und Mahlschüssel 13 erfolgen, sondern auch eine Zentrierung des Mahltellers 2 bzgl. der Mahlschüssel 13.

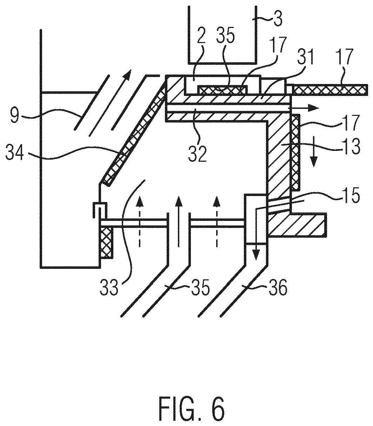

In Figur 6 ist eine weitere Ausführungsform dargestellt. Der ein- oder mehrteilig ausgeführte Mahlteller 2 ist auf einem oberen Flanschbereich 31 der Mahlschüssel 13 angeordnet. Im oberen Flanschbereich 31 ist eine Kühlleitung 32 für Kühlmedium, insbesondere Kühlluft, vorgesehen. Die Kühlleitung 32 erstreckt sich im Wesentlichen in radialer Richtung der Mahlschüssel 13. Die Kühlleitung 32 kann alternativ auch durch Ausnehmungen in der unteren Auflagefläche des Mahltellers 2 und/oder in der Oberfläche des Flanschbereichs 31 vorgesehen sein, sodass die Kühlleitung 32 zwischen Mahlteller 2 und Flanschbereich 31 ausgebildet wird. Die Kühlleitung 32 ermöglicht also, dass die Mahlschüssel 13 vor den hohen Temperaturen im Bereich der Mahlteller 2 geschützt wird.

Weiterhin kann ein Kühlmediumraum 33 radial außerhalb der Mahlschüssel 13 vorgesehen sein. Der Kühlmediumraum 33 kann insbesondere durch eine wärmeisolierende Wand 34 von einem weiter radial außenliegenden Raum für Heißgas abgegrenzt werden. Die wärmeisolierende Wand 34 kann an der Mahlschüssel 13 befestigt sein und mit dieser rotieren. Dafür kann die wärmeisolierende Wand 34 eine Fußdichtung aufweisen, um einen dichten Anschluss an eine stationäre Begrenzung des Kühlmediumraums 33 zu ermöglichen. Die radial innere Begrenzung des Kühlmediumraums 33 kann direkt durch die Mahlschüssel 13 gebildet werden. Das Kühlmedium im Kühlraum kann somit die Mahlschüssel 13 von außen kühlen.

Der Kühlmediumraum 33 und die Kühlleitung 32 ermöglichen eine intensivere Kühlung im radial äußeren Bereich der Mahlschüssel 13, insbesondere im Flanschbereich 31, wo erhöhte Temperaturen vorliegen können. Damit können Wärmespannungen in der Mahlschüssel 13 aufgrund von Temperaturdifferenzen vermieden werden.

Im unteren Bereich des ein- oder mehrteilig ausgeführten Mahltellers 2 können eine oder mehrere Ausnehmungen 35 vorgesehen sein, die die Wärmekonduktion vom Mahlteller 2 auf die Mahlschüssel 13 reduzieren. Insbesondere kann ein Wärmeisolationselement 17 vorgesehen sein, das die Ausnehmung 35 auffüllt. Der Mahlteller 2 weist also eine hohle, wärmegedämmte Auflage auf.

Das Kühlmedium wird unter Druck, beispielsweise durch ein Gebläse in den Kühlluftraum 33 über eine Kühlmediumzuleitung 35 eingeblasen. Das Kühlmedium strömt aus dem Kühlmediumraum 33 in die Kühlleitung 32. Das Kühlmedium strömt aus der Kühlleitung 32 in das hohle Innere der Mahlschüssel 13 und dann durch Öffnungen 15 im unteren Randbereich der Mahlschüssel 13 zurück in den Kühlraum.

Alternativ kann das Kühlmedium unter Unterdruck in die Kühlleitung 32 gesaugt werden. Dann kann statt der Kühlmediumzuleitung 35 der Kühlmediumraum 33 offen gestaltet sein, wie durch die strichlierten Pfeile angedeutet. Der Unterdruck kann insbesondere durch eine erzwungene Abfuhr von Kühlmedium durch eine Kühlmediumableitung 36 erfolgen, die sich an die Öffnungen 15 anschließt. Dafür kann ein in oder nach der Kühlmediumableitung 36 angeordnetes Gebläse vorgesehen sein.

Die vorgenannte Wälzmühle ermöglicht, dass das Tongemisch gleichzeitig hohen Temperaturen und mechanischer Beanspruchung, insbesondere Druck und Scherung, ausgesetzt wird. Die mechanische Belastung des Tongemischs erfolgt zwischen zwei Festkörperflächen, die je nach geometrischer Ausbildung und Anordnung Relativbewegungen zueinander ausführen.

Die Festkörperflächen werden bei der Wälzmühle durch die Mahlwalze und den Mahlteller ausgebildet. Die vorgenannte Walzmühle wird im Allgemeinen als Luftstrommühle betrieben. Das Tongemisch wird dabei durch einen Trägergasstrom, insbesondere das Heißgas, zu einem nicht dargestellten Sichter transportiert, in dem Partikel, die einen bestimmten Feinheitsgrad unterschreiten, abtransportiert werden, währenddessen größere Partikel oder Konglomerate von Partikeln wieder dem Mahlvorgang zugeführt werden.

In der Wälzmühle finden parallel mehrere verfahrenstechnische Vorgänge statt, insbesondere Trocknung, Zerkleinerung und Sichten. Dazu kommt erfindungsgemäß die thermische Beanspruchung durch die hohen Temperaturen, die gleichzeitig zu der mechanischen Beanspruchung erfolgt. Insbesondere ermöglicht die Erwärmung über Heißgas in Kombination mit dem Mahlen eine effiziente Diffusion von bei der Aktivierung abgespaltenem Wasser aus den Partikeln des Tongemischs.

Das derart aktivierte Tongemisch stellt für den späteren Einsatz dann im Vergleich mit einem nicht aktivierten Tongemisch eine erhöhte Fähigkeit einer puzzolanischen Reaktion bereit. Diese ist vorteilhaft beim Aushärten von Zement, der das aktivierte Tongemisch als Zusatzstoff enthält. Bei der puzzolanischen Reaktion verbinden sich Calciumhydroxid und Siliciumdioxid zu Calciumsilikathydraten und verbessern die Aushärtung im Vergleich mit anderen, insbesondere nicht-aktivierten Zusatzstoffen.

Mit der vorangehend beschriebenen Wälzmühle kann insbesondere eine Ausführungsform des erfindungsgemäßen Verfahrens zum mechanochemischen Aktivieren eines Tongemischs durchgeführt werden, bei dem das Tongemisch in der Mühle 1 bei einer Temperatur im Temperaturbereich von wenigstens 300 °C bis 1000 °C, gemahlen wird.

Dabei wird das in den Schichtsilikaten vorliegende Kristallwasser durch Dehydroxylierung ausgetrieben, und die Kristallstruktur der Schichtsilikate ändert sich, wobei insbesondere eine Amorphisierung stattfindet.

Insbesondere ist dafür eine Aktivierungsenergie von mehr als 300 Kilojoule pro Kilogramm, insbesondere von mehr als 400 Kilojoule pro Kilogramm, notwendig.

Das erfindungsgemäße Verfahren ist insbesondere für die Verarbeitung von natürlich vorkommenden Tongemischen ausgelegt. Diese bestehen aus thermisch aktivierbaren Schichtsilikaten, wie Kaolinit, Illit und Glimmer, sowie aus verschiedenen inerten Komponenten, beispielsweise Quarz und Feldspäte. Vorteilhaft sind dabei Tone mit hohem Schichtsilikatanteil.

Die Aktivierbarkeit der Tone ist vom Mineralphasenbestand, d.h. von der Art des Schichtsilikats, der Struktur der Schichtsilikate sowie Gitterstörungen und Fehlordnungen im Kristallgitter abhängig. Für vorteilhafte puzzolanische Eigenschaften, d.h. festigkeitsbildende Eigenschaften bei einer Wasserzugabe, sollten die Tone durch den Aktivierungsprozess in einen weitgehend amorphen Zustand überführt werden.

Dies wird in vorteilhafter Weise durch das erfindungsgemäße Verfahren ermöglicht.

Insbesondere kann das aktivierte Tonmaterial als Zementzusatzstoff bzw. Portlandklinkerersatzstoff vorgesehen werden, wobei hier beispielsweise ein 35 %-Anteil des Zementes durch entsprechend aktiviertes Tongemisch ersetzt werden kann, wodurch insgesamt 50 % an Kohlendioxidemissionen vermieden werden können.

## Patentansprüche

1. Verfahren zum mechanochemischen Aktivieren eines Tongemischs,
**gekennzeichnet durch**
Mahlen des Tongemischs in einer Mühle (1) bei einer Temperatur, die in einem Temperaturbereich von wenigstens 300 Grad Celsius und bis zu 1000 Grad Celsius liegt.

2. Verfahren gemäß Anspruch 1, wobei die Mühle (1) eine Vertikalwälzmühle, insbesondere eine Walzenschüsselmühle ist.

3. Verfahren gemäß Anspruch 1 oder 2, wobei das Tongemisch zu wenigstens 25 Massenprozent aus thermisch aktivierbaren Schichtsilikaten besteht.

4. Verfahren gemäß einem der vorangehenden Ansprüche, wobei das Tongemisch einen Sulfatgehalt von weniger als 3 Massenprozent aufweist.

5. Verfahren gemäß einem der vorangehenden Ansprüche oder nach dem Oberbegriff von Anspruch 1, wobei die Mühle (1) kontinuierlich von Heißgas durchströmt wird.

6. Wälzmühle (1), insbesondere zum mechanochemischen Aktivieren eines Tongemischs, wobei die Wälzmühle (1) umfasst:
einen Antrieb (4),
eine Mahlschüssel (13),
einen Mahlteller (2) und
Mahlwalzen (3),
wobei die Mahlschüssel (13) auf dem Antrieb (4) angeordnet ist,
wobei der Antrieb (4) ausgelegt ist, die Mahlschüssel (13) anzutreiben, sodass die Mahlwalzen (3) auf dem Mahlteller (2) abrollen,
**dadurch gekennzeichnet, dass**
Öffnungen (15) in einem Randbereich der Mahlschüssel (13) vorgesehen sind, um Durchfluss von Kühlmedium zu ermöglichen.

7. Wälzmühle gemäß Anspruch 6, wobei die Mahlschüssel (13) eine Aufstandsfläche (16) aufweist, mit der die Mahlschüssel (13) auf dem Antrieb (4) aufsteht, wobei die Öffnungen (15) als Ausschnitte in der Aufstandsfläche (16) der Mahlschlüssel vorgesehen sind.

8. Wälzmühle gemäß Anspruch 6 oder 7, wobei auf dem äußeren Umfang der Mahlschüssel (13) wenigstens bereichsweise wenigstens ein Wärmeisolationselement (17) vorgesehen ist.

9. Wälzmühle gemäß einem der Ansprüche 6 bis 8, wobei wenigstens eine lokale Düse (19, 20) zum Zuführen von Kühlmedium im Innenraum der Wälzmühle (1) vorgesehen ist.

10. Wälzmühle gemäß einem der Ansprüche 6 bis 9, wobei wenigstens ein Hitzeschild (18) vor wenigstens einem Heißgasaustritt im Innenraum der Wälzmühle (1) vorgesehen ist.

11. Wälzmühle gemäß einem der Ansprüche 6 bis 10, wobei die Mahlwalze (3) auf einer Mahlwalzenachse (21) drehbar gelagert ist, und Kühlmedium durch die oder entlang der Mahlwalzenachse (21) zugeführt wird.

12. Wälzmühle gemäß einem der Ansprüche 6 bis 11, wobei der Mahlteller (2) durch ein elastisches Element (27, 29) auf der Mahlschüssel befestigt wird, wobei das elastische Element (27, 29) ausgelegt ist, unterschiedliche Wärmeausdehnungen zwischen dem Mahlteller (2) und der Mahlschüssel (13) auszugleichen.

13. Wälzmühle gemäß einem der Ansprüche 6 bis 12, weiterhin umfassend einen Düsenring (8), der sich radial außerhalb des Mahltellers (2) erstreckt, wobei der Düsenring (8) durch ein elastisches Element (25) am Mühlengehäuse befestigt ist, wobei das elastisches Element (25) ausgelegt ist, unterschiedliche Wärmeausdehnungen zwischen dem Düsenring (8) und dem Mühlengehäuse (10) auszugleichen.

## Claims

1. Method for the mechanochemical activation of a clay mixture,
**characterized by**
grinding the clay mixture in a mill (1) at a temperature which is in a temperature range of at least 300 degrees Celsius and up to 1000 degrees Celsius.

2. Method according to claim 1, wherein the mill (1) is a vertical roller mill, in particular a bowl mill crusher.

3. Method according to claim 1 or 2, wherein the clay mixture consists of at least 25 mass percent of thermally activatable layered silicates.

4. Method according to one of the preceding claims, wherein the clay mixture has a sulfate content of less than 3 mass percent.

5. Method according to one of the preceding claims or according to the preamble of claim 1, wherein hot gas flows continuously through the mill (1).

6. Roller mill (1), in particular for the mechanochemical activation of a clay mixture, the roller mill (1) comprising:
a drive (4),
a grinding bowl (13),
a grinding table (2) and
grinding rollers (3),
wherein the grinding bowl (13) is arranged on the drive (4),
wherein the drive (4) is adapted to drive the grinding bowl (13) so that the grinding rollers (3) roll on the grinding table (2),
**characterized in that**
openings (15) are provided in an edge region of the grinding bowl (13) to allow cooling medium to flow through.

7. Roller mill according to claim 6, wherein the grinding bowl (13) has a contact surface (16) with which the grinding bowl (13) rests on the drive (4), wherein the openings (15) are provided as recesses in the contact surface (16) of the grinding bowl.

8. Roller mill according to claim 6 or 7, wherein at least one thermal insulation element (17) is provided on the outer periphery of the grinding bowl (13) at least in some areas.

9. Roller mill according to one of claims 6 to 8, wherein at least one local nozzle (19, 20) for supplying cooling medium is provided in the interior of the roller mill (1).

10. Roller mill according to one of claims 6 to 9, wherein at least one heat shield (18) is provided in front of at least one hot gas outlet in the interior of the roller mill (1).

11. Roller mill according to one of claims 6 to 10, wherein the grinding roller (3) is rotatably mounted on a grinding roller axle (21), and cooling medium is supplied through or along the grinding roller axle (21).

12. Roller mill according to one of claims 6 to 11, wherein the grinding table (2) is fixed to the grinding bowl by a resilient element (27, 29), the resilient element (27, 29) being adapted to compensate for different thermal expansions between the grinding table (2) and the grinding bowl (13).

13. Roller mill according to one of claims 7 to 12, further comprising a nozzle ring (8) extending radially outwardly of the grinding table (2), the nozzle ring (8) being fixed to the mill housing by a resilient element (25), the resilient element (25) being adapted to compensate for differential thermal expansions between the nozzle ring (8) and the mill housing (10).

## Revendications

1. Procédé d'activation mécano-chimique d'un mélange argileux,
**caractérisé par** l'étape consistant à
broyer le mélange argileux dans un broyeur (1) à une température située dans une plage de température comprise entre au moins 300 degrés Celsius et 1 000 degrés Celsius.

2. Procédé selon la revendication 1, dans lequel le broyeur (1) est un broyeur à rouleaux vertical, en particulier un broyeur à galets.

3. Procédé selon la revendication 1 ou 2, dans lequel le mélange argileux est constitué d'au moins 25 % en masse de phyllosilicates pouvant être activés de manière thermique.

4. Procédé selon l'une quelconque des revendications précédentes, dans lequel le mélange argileux présente une teneur en sulfates inférieure à 3 % en masse.

5. Procédé selon l'une quelconque des revendications précédentes ou selon la revendication 1, dans lequel le broyeur (1) est parcouru de manière continue par du gaz chaud.

6. Broyeur à rouleaux (1), en particulier permettant une activation mécanochimique d'un mélange argileux, dans lequel le broyeur à rouleaux (1) comprend :
un entraînement (4),
un bol de broyage (13),
une assiette de broyage (2) et
des rouleaux de broyage (3),
dans lequel le bol de broyage (13) est agencé sur l'entraînement (4),
dans lequel l'entraînement (4) est conçu pour entraîner le bol de broyage (13) de sorte que les rouleaux de broyage (3) roulent sur l'assiette de broyage (2),
**caractérisé en ce que**
des ouvertures (15) sont fournies dans une région de bord du bol de broyage (13) afin de permettre le passage du fluide de refroidissement.

7. Broyeur à rouleaux selon la revendication 6, dans lequel le bol de broyage (13) présente une surface d'installation (16) avec laquelle le bol de broyage (13) repose sur l'entraînement (4), dans lequel les ouvertures (15) sont fournies sous forme de découpes dans la surface d'installation (16) du bol de broyage.

8. Broyeur à rouleaux selon la revendication 6 ou 7, dans lequel au moins un élément d'isolation thermique (17) est fourni au moins localement sur la circonférence extérieure du bol de broyage (13).

9. Broyeur à rouleaux selon l'une quelconque des revendications 6 à 8, dans lequel au moins une buse locale (19, 20) est fournie afin d'acheminer du fluide de refroidissement dans l'espace intérieur du broyeur à rouleaux (1).

10. Broyeur à rouleaux selon l'une quelconque des revendications 6 à 9, dans lequel au moins un bouclier thermique (18) est fourni dans l'espace intérieur du broyeur à rouleaux (1) devant au moins une sortie de gaz chaud.

11. Broyeur à rouleaux selon l'une quelconque des revendications 6 à 10, dans lequel le rouleau de broyage (3) est monté rotatif sur un axe de rouleau de broyage (21), et du fluide de refroidissement est acheminé à travers ou le long de l'axe de rouleau de broyage (21).

12. Broyeur à rouleaux selon l'une quelconque des revendications 6 à 11, dans lequel l'assiette de broyage (2) est fixée sur le bol de broyage grâce à un élément élastique (27, 29), dans lequel l'élément élastique (27, 29) est conçu pour compenser différentes dilatations thermiques entre l'assiette de broyage (2) et le bol de broyage (13).

13. Broyeur à rouleaux selon l'une quelconque des revendications 6 à 12, comprenant en outre une bague de buse (8) s'étendant radialement vers l'extérieur de l'assiette de broyage (2), dans lequel la bague de buse (8) est fixée au carter de broyeur grâce à un élément élastique (25), dans lequel l'élément élastique (25) est conçu pour compenser différentes dilatations thermiques entre la bague de buse (8) et le carter de broyeur (10).
